# EUROPÄISCHE PATENTSCHRIFT

(11) **EP 0 470 120 B1**
(45) Veröffentlichungstag und Bekanntmachung des Hinweises auf die Patenterteilung: **29.12.1993**
(21) Anmeldenummer: 90906228.3
(22) Anmeldetag: 25.04.1990
(51) Int. Cl.: B60R 21/00

(54) **STEUERVORRICHTUNG FÜR EINE INSASSEN-SICHERHEITSVORRICHTUNG VON KRAFTFAHRZEUGEN**
CONTROL DEVICE FOR A PASSENGER SAFETY DEVICE FOR MOTOR VEHICLES
DISPOSITIF DE COMMANDE DESTINE A UN SYSTEME DE SECURITE POUR LES OCCUPANTS D'UN VEHICULE AUTOMOBILE

(30) Priorität: 28.04.1989 DE 3914053
(43) Veröffentlichungstag der Anmeldung: 12.02.1992
(73) Patentinhaber: Bayerische Motoren Werke Aktiengesellschaft, 80788 München (DE)
(72) Erfinder: JOST, Michael, D-8044 Unterschleissheim (DE)
(74) Vertreter: Bullwein, Fritz
(86) Internationale Anmeldenummer: EP9000666
(87) Internationale Veröffentlichungsnummer: WO9013456

(56) Entgegenhaltungen:
- DE-A- 3 603 346
- DE-C- 3 545 874
- GB-A- 2 047 516
- US-A- 3 853 331
- US-A- 4 166 641

## Beschreibung

Die Erfindung bezieht sich auf eine Steuervorrichtung nach dem Oberbegriff des Patentanspruchs 1.

Derartige Steuervorrichtungen zum Auslösen von Airbags, Überrollbügeln und dgl. sind allgemein bekannt. Sie sprechen dann an, wenn die gemessene Beschleunigung den bei unkritischem Betrieb des Kraftfahrzeugs üblichen Rahmen übersteigt. Es kann sich dabei sowohl um Absolutwerte oder die Dauer der gemessenen Beschleunigung sowie Verknüpfungen von Werten und Dauer dieser Beschleunigung handeln.

Bei diesen Steuervorrichtungen wird jedoch die Sicherheitsvorrichtung in der Regel nicht ausgelöst, wenn sich das Kraftfahrzeug in einem besonders kritischen Zustand befindet. Dieser tritt dann ein, wenn das Kraftfahrzeug den Kontakt zur Fahrbahn verliert, in dem es beispielsweise "abstürzt".

Der Erfindung liegt die Aufgabe zugrunde, eine Steuervorrichtung der eingangs genannten Art zu schaffen, die die Insassen-Sicherheitsvorrichtung gerade dann auslöst, wenn sich das Kraftfahrzeug in der angesprochenen besonders kritischen Situation befindet.

Die Erfindung löst diese Aufgabe durch die kennzeichnenden Merkmale des Patentanspruchs 1.

Bei Schwerelosigkeit sind die Beschleunigungswerte im Kraftfahrzeug relativ gering. Dennoch ist es bereits während des freien Falls erforderlich, die Sicherheitsvorrichtung auszulösen, da bei Beendigung des schwerenlosen Zustandes häufig extrem hohe Beschleunigungswerte auftreten (Aufprall). Durch die Erfindung wird erreicht, daß während des schwerelosen Zustandes bereits die Sicherheitsvorrichtung zur Wirkung kommt, um somit am Ende der Schwerelosigkeit einen hinreichenden Schutz der Fahrzeuginsassen zu liefern.

Da beim normalen Fahrbetrieb gelegentlich ein der Schwerelosigkeit nahekommender Zustand des Kraftfahrzeugs erreicht wird, dient eine Weiterbildung der Erfindung dazu, zwischen derartigen "normalen" und "kritischen" Situationen zu unterscheiden. Um bei derartigen Situationen, die beispielsweise beim Fahren über eine Kuppe auftreten, ein nicht notwendiges Auslösen der Sicherheitsvorrichtung zu vermeiden, wird mit Hilfe eines Zeitglieds die Dauer des kritischen Zustands bestimmt. Ist diese Dauer klein, d.h. handelt es sich nur um ein zeitlich gesehen sehr kurzen kritischen Zustand, so soll die Insassen-Sicherheitsvorrichtung nicht ausgelöst werden. Die schaltungstechnischen Mittel für diese Weiterbildung der Erfindung sind im Patentanspruch 2 angegeben.

Zwar ist aus der DE-PS 35 45 874 eine Sicherheitsvorrichtung für einen überrollbügel eines Kraftfahrzeugs bekannt, die mit Hilfe eines Radausfederungs-Sensors gesteuert ist. Dabei wird jedoch im Gegensatz zur Erfindung der Zustand des freien Falls nicht berücksichtigt, da das Signal des Radausfederungs-Sensors nur dann zur Wirkung kommt, wenn gleichzeitig ein beim Überschreiten einer bestimmten Neigung betätigter Neigungsschalter anspricht. Ein funktioneller Zusammenhang mit der Neigung des Kraftfahrzeugs ist jedoch beim schwerelosen Zustand häufig nicht gegeben.

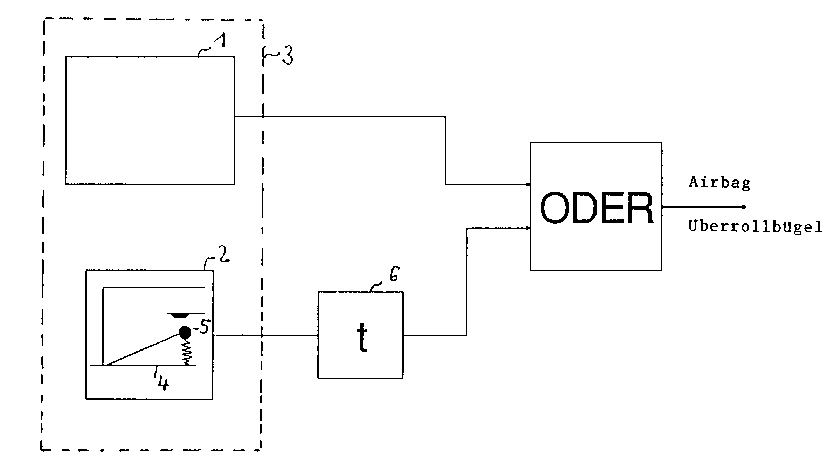

In der Zeichnung ist ein Ausführungsbeispiel der Erfindung dargestellt.

Die dargestellte einzige Figur zeigt eine Steuervorrichtung für eine Insassen-Sicherheitsvorrichtung, die durch einen Sensoreinrichtung 1 und unabhängig davon von einem Bewegungszustands-Sensor 2 auslösbar ist. Dies ist durch ein ODER-Funktionsglied symbolisiert.

Bei der Sicherheitsvorrichtung handelt es sich beispielsweise um einen Airbag oder um einen Überrollbügel (nicht dargestellt) eines Kraftfahrzeugs. Die Sensoreinrichtung 1 kann beispielsweise, wie in der älteren eigenen Patentanmeldung mit dem amtlichen deutschen Aktenzeichen P 38 15 938.4 beschrieben, ausgebildet sein und aus einer oder mehreren Röhren-Libellen bestehen. Es ist aber auch möglich, eine beliebige andere Ausgestaltung zu verwenden, wie sie aus dem Stand der Technik hervorgeht und die Transversalbeschleunigung bzw. den Rotationszustand mit Hilfe von beweglichen Massekörpern bestimmen.

Der Bewegungszustands-Sensor 2 spricht auf die vertikale Beschleunigung des Kraftfahrzeugs an und kann zusammen mit der Sensoreinrichtung 1 in einem gemeinsamen Gehäuse 3 integriert sein. Im einfachsten Fall handelt es sich beim Sensor 2 um eine Waage 4, mit der das Gewicht eines Massekörpers 5 bestimmt wird.

Bei normalen Fahrzuständen zeigt die Waage 4 einen Wert an, der um den Wert des tatsächlichen Gewichts schwankt. Die Schwankungen sind durch vorübergehende relativ geringe vertikale Beschleunigungen bedingt, die das Kraftfahrzeug während des Fahrbetriebs erfährt.

Verliert das Kraftfahrzeug den Kontakt zum Untergrund, so stellt sich ein Bewegungszustand ein, der dem der Schwerelosigkeit zumindest ähnlich ist. Die Waage 4 liefert nun einen Wert, der im "Idealfall", d.h. dem ungestörten freien Fall, gleich Null ist bzw. innerhalb eines kleinen Wertebereich um diesen Wert herum liegt.

Die Steuervorrichtung erkennt so den Zustand der Schwerelosigkeit. Hält dieser eine gewisse Zeit, beispielsweise 100 msec. an, so wird durch die Steuervorrichtung der Airbag bzw. der Überrollbügel ausgelöst und in Funktion gebracht. Die angegebene Zeitdauer wird mit Hilfe eines Zeitglieds 6 bestimmt, über die das Ausgangssignal der Waage 4 geführt ist.

Die Auslösung der Sicherheitsvorrichtung durch den Bewegungszustands-Sensor 2 erfolgt unabhängig von der möglichen Auslösung durch den Beschleunigungs-Sensor 1 und somit auch, wenn dieser keinen kritischen Wert der gemessenen Beschleunigung feststellt. Damit ist sichergestellt, daß unter sämtlichen möglichen Bewegungszuständen des Kraftfahrzeugs die Sicherheitsvorrichtung rechtzeitig ausgelöst wird und somit ihre Funktion sicher erfüllt.

## Patentansprüche

1. Steuervorrichtung für eine Insassen-Sicherheitsvorrichtung von Kraftfahrzeugen, die gesteuert durch eine auf eine Longitudinal und/oder Transversalbeschleunigung ansprechende Sensoreinrichtung (1) die Sicherheitsvorrichtung auslöst, dadurch gekennzeichnet, daß ein zusätzlicher Bewegungszustands-Sensor (2) mit nachgeschalteter Auswerteschaltung (ODER) vorgesehen ist, der auf die vertikale Beschleunigung anspricht und unabhängig von der Sensoreinrichtung (1) die Sicherheitsvorrichtung auslöst, wenn das Kraftfahrzeug sich in einem der Schwerelosigkeit nahekommenden Zustand befindet.

2. Steuervorrichtung nach Anspruch 1, dadurch gekennzeichnet, daß dem Bewegungszustands-Sensor (2) ein Zeitglied (6) nachgeschaltet ist, und daß die Sicherheitsvorrichtung durch die Auswerteschaltung (ODER) ausgelöst ist, wenn sich das Fahrzeug länger als die Schaltzeit (t) in dem der Schwerelosigkeit nahekommenden Zustand befindet.

## Claims

1. A control device for a passenger safety device in motor vehicles, the device triggering a safety device after being actuated by a sensor means (1) which responds to longitudinal and/or transverse acceleration, characterised in that an additional state-of-motion sensor (2) and a downstream evaluating (OR) circuit are provided and respond to the vertical acceleration and, irrespective of the sensor means (1), trigger the safety device when the vehicle is in a state approaching zero gravity.

2. A control device according to claim 1, characterised in that the state-of-motion sensor (2) is followed by a time element (6), and the safety device is triggered by the evaluation (OR) circuit if the vehicle is in the near zero-gravity state for longer than the switching time (t).

## Revendications

1. Dispositif de commande pour un dispositif de sécurité des occupants de véhicules automobiles, qui déclenche le dispositif de sécurité en étant commandé par un dispositif de détection (1) réagissant à une accélération longitudinale et/ou transversale, dispositif de commande caractérisé en ce qu'il est prévu un détecteur supplémentaire d'état de déplacement (2) à la suite duquel est branché un circuit d'exploitation (OU), et qui réagit à l'accélération verticale en déclenchant, indépendamment du dispositif de détection (1), le dispositif de sécurité lorsque le véhicule se trouve dans un état se rapprochant de l'apesanteur.

2. Dispositif de commande selon la revendication 1, caractérisé en ce qu'un organe de temporisation (6) est branché à la suite du détecteur d'état de déplacement (2), et en ce que le dispositif de sécurité est déclenché par le circuit d'exploitation (OU) lorsque le véhicule se trouve encore dans un état se rapprochant de l'apesanteur après l'écoulement du temps de commutation (t).
